# EUROPEAN PATENT SPECIFICATION

(11) **EP 0 530 204 B1**
(45) Date of publication and mention of the grant of the patent: **17.07.1996**
(21) Application number: 91907384.1
(22) Date of filing: 03.04.1991
(51) Int. Cl.: E21B 33/13, C09K 7/02, C04B 24/16

(54) **DISPERSANT COMPOSITIONS FOR SUBTERRANEAN WELL DRILLING AND COMPLETION**
DISPERGIERMITTEL-ZUSAMMENSETZUNGEN FÜR BOHRUNG UND ABDICHTUNG UNTERERDISCHER QUELLEN
COMPOSITIONS DE DISPERSANTS UTILISEES DANS LE FORAGE ET LA COMPLETION DE PUITS SOUTERRAINS

(30) Priority: 26.04.1990 US 514900
(43) Date of publication of application: 10.03.1993
(73) Proprietor: ATLANTIC RICHFIELD COMPANY, Plano, TX 75075 (US)
(72) Inventor: BLOYS, James, B., Plano, TX 75023 (US); MORGAN, Richard, F., Anchorage, Alaska 99516 (US)
(74) Representative: Cropp, John Anthony David
(86) International application number: US9102279
(87) International publication number: WO9116365

(56) References cited:
- EP-A- 0 030 425
- EP-A- 0 170 527
- EP-A- 0 320 288
- CA-A- 1 163 429
- DE-A- 1 162 253
- DE-A- 3 338 431
- DE-A- 3 700 535
- FR-A- 2 533 549
- US-A- 2 905 565
- US-A- 3 203 938
- US-A- 4 048 077
- US-A- 4 340 525
- US-A- 4 390 672
- US-A- 4 631 137
- US-A- 4 674 574

## Description

### BACKGROUND OF THE INVENTION

### Field of the Invention

The present invention pertains to compositions for use in the drilling and completion of subterranean wells. More specifically, the present invention relates to dispersants spacer fluids, completion fluids, cement slurries and mixtures of drilling fluids and cement slurries.

### Description of the Prior Art

Techniques are well known for drilling and completing wells, particularly gas and oil wells, which are drilled from the surface of the earth to a subterranean formation containing a fluid mineral which it is desired to recover. After the fluid-containing geologic formation is located by investigation, a borehole is drilled through the overlying layers of the earth's crust to the fluid-containing geologic formation to permit recovery of the fluid mineral contained therein.

The drilling fluids used during drilling of the borehole are generally classified on the basis of their principal component. When the principal ingredient is a liquid (water or oil) the term "mud" is applied to a suspension of solids in the liquid. The most common drilling fluids contain water as the principal component. These drilling fluids are known as water-base drilling fluids or "water muds".

Water-base drilling fluids vary widely in composition and properties and many have been classified based on their principal ingredients. Some common classifications of water-base drilling fluids are freshwater muds, low solids muds, spud muds, salt water muds, lime muds, gyp muds and CL-CLS muds.

In addition to water, drilling fluids often include any number of known additives which perform various functions in the drilling fluid system. Among the most common additives are materials which increase density such as barite and galena and viscosifiers or thickening agents such as clays (usually bentonite).

Furthermore, many water-base drilling fluids are formulated to contain one or more polymeric additives which serve to disperse the drilling fluid, reduce the rate of filtrate loss, stabilize clays, flocculate drilled solids, increase carrying capacity, emulsify, lubricate and the like. Among the most commonly employed polymeric additives are starches, guar gum, xanthan gum, sodium carboxy-methylcellulose (CMC), hydroxyethylcellulose (HEC), carboxy methyl hydroxyethylcellulose (CMHEC) and synthetic water dispersible polymers such as acrylics and alkylene-oxide polymers.

Also well known and important for their ability to reduce flow resistance and gel development in clay-water muds are materials which are broadly referred to in the drilling fluid industry as "dispersants". Materials conventionally used as dispersants are classified as plant tannins, polyphosphates, lignitic materials, synthetic water dispersible polymers and lignosulfonates.

When the drilling of the borehole is completed, a casing is secured in position within the borehole to insure permanence of the borehole and to prevent entry into the well of a fluid from a formation other than the formation which is being tapped. The well casing is typically cemented in place by pumping a cement slurry downwardly through the casing. The cement slurry flows out of the open lower end of the casing at the well bottom and then upwardly around the casing in the annular space between the outer wall of the casing and the wall of the well borehole. Frequently, a spacer fluid is pumped downwardly through the casing ahead of the cement slurry to form a buffer between and to prevent the contact of the drilling fluid and the cement slurry which are typically incompatible fluids.

The drilling process which produces the borehole will usually leave behind on the wall of the borehole produced, a drilling fluid filter cake of mud-like material. This material is a barrier to the formation of proper bonding by any cement composition employed to produce an impermeable bond between the casing and the well wall.

In an ideal cementing operation the drilling fluid filter cake would be removed from the well bore wall and replaced by the cement slurry to permit the formation of a solid layer of hardened, cured and bonded cement between the casing and the geologic formations through which the well borehole passes. It has been recognized in the art that removal of the drilling fluid filter cake is greatly enhanced by injecting the cement slurry, spacer fluids or the like into the well borehole under turbulent flow conditions.

Inducing turbulence by control of flow velocity alone requires a specific minimum velocity, which in turn is limited by the maximum pressure the wellbore can tolerate. Particularly, where the turbulence induced is sufficient to assure removal of the drilling fluid filter cake, additional pumping capacity and very high pressure levels are usually required. These required pressure levels, especially for deep wells, often exceed the pressure at which the subterranean formations break down, resulting in lost circulation. In addition, the required pressure level may exceed the capacity of the pumping equipment or the endurance of the well drilling and associated apparatus.

The pumping of cement slurries in turbulent flow at lower flow velocities than would be possible using conventional cement slurry compositions, has been accomplished in the prior art by adding to the said cement slurries a flow-property-improving and turbulence-inducing agent, which agent is also known as a dispersant.

After the drilling of the borehole is completed and the casing is cemented in position within the borehole, the casing is perforated to permit recovery of a fluid mineral. Frequently, a completion fluid is disposed within the borehole to maintain a hydrostatic head during the perforation process. Some common completion fluids are clear brines and bland drilling fluids.

In the cementing of oil and gas wells, rather than displacing and removing the drilling fluid during cement slurry placement, it has been proposed to convert the drilling fluid to a cementitious slurry for cementing casing or tubing in place or otherwise stabilizing or protecting the casing by sealing the formation in the vicinity of the borehole.

The conversion of drilling fluid or "mud" to a cement slurry, however, is not without some operational problems and undesirable compositional changes. For example, the addition of cementitious materials such as mixtures of lime, silica and alumina, or lime and magnesia, silica and alumina and iron oxide, or cement materials such as calcium sulphate and Portland cements to aqueous drilling fluids can substantially increase the viscosity of the fluid mixture and result in severe flocculation. Efforts to circulate such mixtures through a wellbore can result in a highly unsatisfactory circulation rate, plugging of the wellbore annulus, breakdown of the earth formation in the vicinity of the wellbore and a failure of the cement slurry to properly mix.

These problems can be overcome by the addition of a dispersant composition which disperses both the drilling fluid and the cement slurry and allows mixtures of drilling fluids and cement slurries to be pumpable. However, conventional drilling fluid dispersants do not necessarily disperse cement slurries and conventional cement slurry dispersants do not necessarily disperse drilling fluids. In addition, conventional dispersants which do disperse both drilling fluids and cement slurries do not necessarily disperse mixtures of drilling fluids and cement slurries.

U.S. Patent No. 3,730,900 discloses that sulfonated styrene maleic anhydride copolymer (SSMA) provides colloidal stabilization in aqueous drilling fluids. U.S. Patent Nos. 3,952,805 and 4,036,660 disclose that SSMA acts as a flow-property improving and turbulence-inducing additive in cement slurries. U.S. Patent Nos. 4,883,125, discloses that SSMA acts as a dispersant for mixtures of drilling fluids and cement slurries in a mud-to-cement conversion process.

U.S. Patent No. 2,650,905 discloses that sulfonated polystyrene and copolymers of sulfonated styrene with maleic acid, fumaric acid, acrylic acid and methacrylic acid and their alkali metal and ammonium salts provide fluid-loss control in drilling fluids. U.S. Patent No. 2,718,497 discloses that polyacrylic acid, acrylic acid-fumaric acid copolymer, polymethacrylic acid, acrylic acid-isobutylene copolymer, isobutylene-maleic anhydride and isobutylene-maleic acid copolymer and their alkali and ammonium salts provide fluid-loss control in drilling fluids.

US-A-3,234,154 and 3,409,080 disclose that sulfonated polystyrene and polyvinyl alcohol provide fluid-loss control in and reduce the setting time of cement slurries.

Dispersant compositions typically exhibit varying properties and performance under different conditions. The performance of dispersant compositions may be evaluated in applications such as, drilling fluid dispersion, mud-to-cement dispersion, cement dispersion, low salt-low hardness mud dispersion, high salt-high hardness mud dispersion and at high temperature in all of the preceding applications.

EP-A-0170527 is directed to the use of polymers and copolymers of sulfonated ethylenically unsaturated compounds as thinners in aqueous drilling and packer fluids.

The present invention has been developed with a view to providing improved dispersant compositions that control rheological properties of, enhance filtrate control in, and disperse, spacer fluids, completion fluids, cement slurries and mixtures of drilling fluids and cement slurries.

According to the present invention, there is provided a fluid composition comprising a fluid selected from spacer fluids, completion fluids, cement slurries and mixtures of drilling fluids and cement slurries, and a specified dispersant copolymer which controls the rheological properties of and enhances filtrate control in the fluid.

According to the present invention, the dispersants comprise a copolymer of a first monomer and a second monomer, wherein the first monomer is maleic anhydride, maleic acid, acrylic acid, or methacrylic acid and the second monomer is sulfonated ethene, sulfonated propene, sulfonated 1-butene, sulfonated 2-butene, sulfonated 1-pentene sulfonated 2-pentene, sulfonated 2-methyl-1-butene, sulfonated 2-methyl-2-butene, sulfonated 3-methyl-1-butene, sulfonated cyclopentene, sulfonated cyclohexene, sulfonated 1-hexene, sulfonated 2-hexene, sulfonated 3-hexene, sulfonated 2-methyl-1-pentene, sulfonated 2-methyl-2-pentene, sulfonated 2-methyl-3-pentene, sulfonated 3-methyl-1-pentene, sulfonated 3-methyl-2-pentene, sulfonated 4-methyl-1-pentene, sulfonated 3,3-dimethyl-1-butene, sulfonated 2,3-dimethyl-1-butene, sulfonated 2,3-dimethyl-2-butene, sulfonated 2-ethyl-1-butene, sulfonated 1,3-butadiene, sulfonated 1,3-pentadiene, sulfonated 1,4-pentadiene, sulfonated 2-methyl-1,3-butadiene, sulfonated 2,3-dimethyl-1,3-butadiene, sulfonated 2-ethyl-butadiene, sulfonated 2-methyl-1,3-pentadiene, sulfonated 3-methyl-1,3-pentadiene, sulfonated 4-methyl-1,3-pentadiene, sulfonated 2-methyl-1,4-pentadiene, sulfonated 3-methyl-1,4-pentadiene, sulfonated 4-methyl-1,4-pentadiene, sulfonated 1,3-hexadiene, sulfonated 1,4-hexadiene, sulfonated 1,5-hexadiene, sulfonated 2,4-hexadiene, or sulfonated 1,3,5-hexatriene. The sulfonate and carboxylate groups on the copolymers may be present in neutralized form as alkali metal or ammonium salts. The copolymers of the present invention, preferably, include molar ratios of the first monomer to the second monomer ranging from 10:1 to 1:10.

The invention also provides a method for converting a drilling fluid to a cement slurry for securing a casing within a borehole wherein said casing has an inner and outer wall and wherein said borehole defines an annular space about said outer wall of said casing, said annular space being occupied by said drilling fluid, said method comprising adding a cementitious material to said drilling fluid; and adding a dispersant copolymer of the kind described above to said drilling fluid.

Further provided is a method for securing a casing within a borehole, wherein said casing has an inner and an outer wall, and wherein said borehole defines an annular space about said outer wall of said casing, said annular space being occupied by a drilling fluid, said method comprising displacing said drilling fluid with a composition as defined above wherein the fluid (a) comprises cement slurry.

Still further according to the invention, there is provided a method for securing a casing within a borehole wherein said casing has an inner and an outer wall, and wherein said borehole defines an annular space about said outer wall of said casing, said annular space being occupied by a drilling fluid, said method comprising at least partially displacing said drilling fluid from said annular space with a first displacing fluid comprising a composition as defined above wherein the fluid (a) comprises spacer fluid, and displacing said first displacing fluid with a settable cement slurry.

Yet further according to the invention, there is provided a method of perforating a casing secured within a borehole to permit recovery of a fluid mineral wherein said casing has an inner and outer wall, and wherein said borehole defines an annular space about said outer wall of said casing, said annular space being occupied by a hardened cement, said method comprising maintaining a hydrostatic head within said borehole with a composition as defined above wherein said fluid (a) comprises completion fluid.

Those skilled in the art will further appreciate the above-described features of the present invention together with other superior aspects thereof upon reading the detailed description which follows.

### DESCRIPTION OF PREFERRED EMBODIMENTS

The present invention relates to dispersants that control the rheological properties of, enhance filtrate control in, and disperse one or more of spacer fluids, completion fluids, cement slurries and mixtures of drilling fluids and cement slurries.

According to the present invention, the molecular weight of the dispersants preferably is in the range of 1,000-20,000, and most preferably, is in the range of 2,000-12,000.

In addition, it is preferred that the dispersants have a high density of anionic charge, because the surface of the particles to be dispersed have some degree of positive charge. It is also preferred that the dispersants include an anionic charge supplying functional group such as a sulfonate or carboxylate group.

In spacer fluids, completion fluids and mixtures which include drilling fluids, it is preferred that the dispersants contain a sulfonate group when good salt tolerance is desired. It is contemplated that when good salt tolerance is desired, the dispersants include a sulfonate group in conjunction with polar nonionic groups, hydroxyl groups, aliphatic ester groups and alkylene oxide groups. In addition, the more salt tolerant dispersants tend to have fewer carboxylate groups which are more sensitive to divalent ions than are sulfonate groups.

In cement slurries and mixtures of drilling fluids and cement slurries, it is preferred that the dispersants contain a carboxylate group which has a high affinity for the calcium molecules contained in the cement slurry.

According to a preferred embodiment of the present invention, the first monomer is maleic anhydride.

The water-solubility of the dispersants according to the present invention is influenced by both the molecular weight of the polymer and the presence of sulfonate or carboxylate groups on the polymer. As the molecular weight of the polymers increases their water-solubility decreases. As noted above, the polymers have a molecular weight, preferably, in the range of 1,000 to 20,000 and, most preferably, in the range of 2,000 to 12,000. The above molecular weight ranges are before sulfonation and, accordingly, do not include the weighting of these groups.

The sulfonate or carboxylate groups improve the water solubility of the polymers. When desired, the polymers of the present invention contain a sufficient number of sulfonate or carboxylate groups to render the polymer water soluble.

The copolymers of the present invention can be prepared by conventional polymerization techniques such as those described in Witcoff, Harold, ed. Industrial Organic Chemicals in Perspective Part One: Raw Materials and Manufacture, New York, NY, John Wiley & Sons, Inc., 1980, which techniques will produce a polymer having the desired characteristics, and which techniques are well known to those of ordinary skill in the art. The polymers may be sulfonated as desired according to techniques well known to those of ordinary skill in the art such as those described in March, Jerry, ed. Advanced Organic Chemistry, 2nd Ed., McGraw-Hill, Inc., 1977, and in U.S. Patent No. 4,797,450.

The sulfonate and carboxylate groups on the polymers of the present invention, preferably are present in neutralized form as alkali metal or ammonium salts.

The dispersants, preferably, are added to spacer fluids, completion fluids, cement slurries and mixtures of drilling fluids and cement slurries, as the case may be, at the rate of between 0.285 and 57.1 g/l (0.1 and 20.0 lbs. per 42-gallon barrel (ppb)) of the original fluid and preferably between 2.85 and 28.5 g/l (1.0 and 10.0 ppb).

The dispersants of the present invention have utility in one or more of spacer fluids, completion fluids, cement slurries and mixtures of drilling fluids and cement slurries.

When added to spacer fluids and completion fluids, the dispersants modify the rheological properties of the fluids and result in fluids having a plastic viscosity of from 3 to 70 x 10⁻³ Pas (3 to 70 centipoises), preferably, from 5 to 50 x 10⁻³ Pas (5 to 50 centipoises) and a yield point of from 0.96 to 23.9 Pa (2 to 50 lbs/100 ft²), preferably, from 2.4 to 14.4 Pa (5 to 30 lbs/100 ft²).

When added to cement slurries and mixtures of drilling fluids and cement slurries, the dispersants modify the rheological properties of the fluids and result in fluids having a plastic viscosity of from 10 to 400 x 10⁻³ Pa.s (10 to 400 centipoises) preferably, from 20 to 200 x 10⁻³ Pa.s (20 to 200 centipoises) and a yield point of from 0 to 47.9 Pa (0 to 100 lbs/100 ft²), preferably, from 2.4 to 23.9 Pa (5 to 50 lbs/100 ft²).

## Claims

1. A fluid composition for use in the drilling and completion of subterranean wells comprising
(a) a fluid selected from completion fluid, spacer fluid, cement slurry and a mixture of a drilling fluid and cement slurry; and
(b) a dispersant copolymer comprising a first monomer and a second monomer, wherein said first monomer is selected from maleic anhydride, maleic acid, acrylic acid, and methacrylic acid and wherein said second monomer is selected from the group consisting of sulfonated ethene, sulfonated propene, sulfonated 1-butene, sulfonated 2-butene, sulfonated 1-pentene, sulfonated 2-pentene, sulfonated 2-methyl-1-butene, sulfonated 2-methyl-2-butene, sulfonated 3-methyl-1-butene, sulfonated cyclopentene, sulfonated cyclohexene, sulfonated 1-hexene, sulfonated 2-hexene, sulfonated 3-hexene, sulfonated 2-methyl-1-pentene, sulfonated 2-methyl-2-pentene, sulfonated 2-methyl-3-pentene, sulfonated 3-methyl-1-pentene, sulfonated 3-methyl-2-pentene, sulfonated 4-methyl-1-pentene, sulfonated 3,3-dlmethyl-1-butene, sulfonated 2,3-dimethyl-1-butene, sulfonated 2,3-dimethyl-2-butene, sulfonated 2-ethyl-1-butene, sulfonated 1,3-butadiene, sulfonated 1,3-pentadiene, sulfonated 1,4-pentadiene, sulfonated 2-metyl-1,3-butadiene, sulfonated 2,3-dimethyl-1,3-butadiene, sulfonated 2-ethyl-butadiene, sulfonated 2-methyl-1,3-pentadiene, sulfonated 3-methyl-1,3-pentadiene, sulfonated 4-methyl-1,3-pentadiene, sulfonated 2-methyl-1,4-pentadiene, sulfonated 3-methyl-1,4-pentadiene, sulfonated 4-methyl-1,4-pentadiene, sulfonated 1,3-hexadiene, sulfonated 1,4-hexadiene, sulfonated 1,5-hexadiene, sulfonated 2,4-hexadiene, and sulfonated 1,3,5-hexatriene.

2. A fluid according to Claim 1, characterised in that sulfonic acid and/or carboxylic acid groups of the dispersant copolymer are present in neutralized form as alkali metal salts or ammonium salts.

3. A fluid according to Claim 1 or Claim 2, characterised in that in said dispersant copolymer the molar ratio of said first monomer to said second monomer is from 10:1 to 1:10.

4. A fluid according to any one of Claims 1 to 3 characterised in that said fluid comprises from 0.285 to 57.1g of dispersant per litre of fluid (from 0.1 to 20.0 pounds of said dispersant per 42.0 gallons of said fluid).

5. A fluid according to any one of Claims 1 to 3 characterised in that said fluid comprises 2.85 to 28.5g of dispersant per litre of fluid (from 1.0 to 10.0 pounds of said dispersant per 42.0 gallons of said fluid).

6. A fluid according to any one preceding claim characterised in that the dispersant copolymer has a molecular weight in the range 2,000 to 12,000 before sulfonation.

7. A fluid according to any one preceding claim characterised in that the dispersant copolymer is water-soluble.

8. A fluid composition as claimed in any one preceding claim wherein fluid (a) is a spacer fluid or completion fluid and the dispersant copolymer includes groups selected from polar non-ionic groups, hydroxyl groups, aliphatic ester groups and alkylene oxide groups, as well as sulfonate groups.

9. A fluid composition as claimed in any one of Claims 1 to 8 wherein fluid (a) is a spacer fluid or a completion fluid said fluid composition having a plastic viscosity of 3 to 70 x 10⁻³Pas (3 to 70 centipoises) and a yield point of from 0.96 to 23.9Pa (2 to 50 lbs/100ft²).

10. A fluid composition as claimed in any one of Claims 1 to 7 wherein fluid (a) is a cement slurry or a mixture of a drilling fluid and cement slurry, said fluid composition having a plastic viscosity of from 10 to 400 x 10⁻³Pas (10 to 400 centipoises) and a yield point of from 0 to 47.9Pa (0 to 100 lbs/100ft²).

11. A method for converting a drilling fluid to a cement slurry for securing a casing within a borehole wherein said casing has an inner and outer wall and wherein said borehole defines an annular space about said outer wall of said casing, said annular space being occupied by said drilling fluid, said method comprising:
adding a cementitious material to said drilling fluid; and
adding a dispersant copolymer as specified in any one of Claims 1 to 3 to said drilling fluid.

12. A method for securing a casing within a borehole, wherein said casing has an inner and outer wall, and wherein said borehole defines an annular space about said outer wall of said casing, said annular space being occupied by a drilling fluid, said method comprising:
displacing said drilling fluid with a settable cement composition as claimed in any one of Claims 1 to 7 and 10 wherein the fluid comprises cement slurry.

13. A method for securing a casing within a borehole wherein said casing has an inner and outer wall, and wherein said borehole defines an annular space about said outer wall of said casing, said annular space being occupied by a drilling fluid, said method comprising:
at least partially displacing said drilling fluid from said annular space with a first displacing fluid comprising a composition as claimed in any one of Claims 1 to 9 wherein the fluid comprises spacer fluid, and displacing said first displacing fluid with a settable cement slurry.

14. A method of perforating a casing secured within a borehole to permit recovery of a fluid mineral wherein said casing has an inner and outer wall, and wherein said borehole defines an annular space about said outer wall of said casing, said annular space being occupied by a hardened cement, said method comprising:
maintaining a hydrostatic head within said borehole with a composition as claimed in any one of Claims 1 to 9 wherein said fluid comprises completion fluid.

## Patentansprüche

1. Fluidzusammensetzung zur Verwendung beim Bohren und bei der Fertigstellung von unterirdischen Bohrlöchern, enthaltend:
(a) ein Fluid, das aus einem Ergänzungsfluid, einer Trennflüssigkeit, einer Zementaufschlämmung sowie einer Mischung aus Bohrfluid und Zementaufschlämmung ausgewählt ist, und
(b) ein Copolymer als Dispergiermittel, welches ein erstes und ein zweites Monomer enthält, wobei das erste Monomer aus Maleinsäureanhydrid, Maleinsäure, Acrylsäure und Methacrylsäure und das zweite Monomer aus der Gruppe ausgewählt ist, die aus sulfoniertem Ethen, sulfoniertem Propen, sulfoniertem But-1-en, sulfoniertem But-2-en, sulfoniertem Pent-1-en, sulfoniertem Pent-2-en, sulfoniertem 2-Methylbut-1-en, sulfoniertem 2-Methylbut-2-en, sulfoniertem 3-Methylbut-1-en, sulfoniertem Cyclopenten, sulfoniertem Cyclohexen, sulfoniertem Hex-1-en, sulfoniertem Hex-2-en, sulfoniertem Hex-3-en, sulfoniertem 2-Methylpent-1-en, sulfoniertem 2-Methylpent-2-en, sulfoniertem 2-Methylpent-3-en, sulfoniertem 3-Methylpent-1-en, sulfoniertem 3-Methylpent-2-en, sulfoniertem 4-Methylpent-1-en, sulfoniertem 3,3-Dimethylbut-1-en, sulfoniertem 2,3-Dimethylbut-1-en, sulfoniertem 2,3-Dimethylbut-2-en, sulfoniertem 2-Ethylbut-1-en, sulfoniertem 1,3-Butadien, sulfoniertem 1,3-Pentadien, sulfoniertem 1,4-Pentadien, sulfoniertem 2-Methyl-1,3-butadien, sulfoniertem 2,3-Dimethyl-1,3-butadien, sulfoniertem, 2-Ethylbutadien, sulfoniertem 2-Methyl-1,3-pentadien, sulfoniertem 3-Methyl-1,3-pentadien, sulfoniertem 4-Methyl-1,3-pentadien, sulfoniertem 2-Methyl-1,4-pentadien, sulfoniertem 3-Methyl-1,4-pentadien sulfoniertem 4-Methyl-1,4-pentadien, sulfoniertem 1,3-Hexadien, sulfoniertem 1,4-Hexadien, sulfoniertem 1,5-Hexadien, sulfoniertem 2,4-Hexadien und sulfoniertem 1,3,5-Hexatrien besteht.

2. Fluid gemäß Anspruch 1, dadurch gekennzeichnet, daß die Sulfonsäure- und/oder Carbonsäuregruppen des als Dispergiermittel verwendeten Copolymeren in neutralisierter Form als Alkalimetallsalze oder Ammoniumsalze vorliegen.

3. Fluid gemäß Anspruch 1 oder 2, dadurch gekennzeichnet, daß in dem als Dispergiermittel verwendeten Copolymer das Molverhältnis des ersten zum zweiten Monomer von 10 : 1 bis 1 : 10 beträgt.

4. Fluid gemäß einem der Anbsprüche 1 - 3, dadurch gekennzeichnet, daß das Fluid 0,285 bis 57,1 g Dispergiermittel pro Liter Fluid enthält (von 0,1 bis 20,0 Pfund Dispergiermittel auf 42,0 Gallonen Fluid).

5. Fluid gemäß einem der Ansprüche 1 - 3, dadurch gekennzeichnet, daß das Fluid 2,85 bis 28,5 g Dispergiermittel pro Liter Fluid enthält (von 0,1 bis 10,0 Pfund Dispergiermittel auf 42,0 Gallonen Fluid).

6. Fluid gemäß einem der vorstehenden Ansprüche, dadurch gekennzeichnet, daß das Copolymer als Dispergiermittel vor der Sulfonierung ein Molekulargewicht im Bereich von 2.000 bis 12.000 aufweist.

7. Fluid gemäß einem der vorstehenden Ansprüche, dadurch gekennzeichnet, daß das als Dispergiermittel verwendete Copolymer wasserlöslich ist.

8. Fluid gemäß einem der vorstehenden Ansprüche, bei dem das Fluid (a) eine Trennflüssigkeit ist und das Copolymer als Dispergiermittel aus polaren nichtionischen Gruppen, Hydroxylgruppen, aliphatischen Estergruppen und Alkylenoxidgruppen sowie Sulfonatgruppen ausgewählte Gruppen aufweist.

9. Fluidzusammensetzung gemäß einem der Ansprüche 1 bis 8, in der das Fluid (a) eine Trennflüssigkeit oder ein Ergänzungsfluid ist, wobei die Fluidzusammensetzung eine plastische Viskosität von 3 - 70 x 10⁻³ Pas (3 - 70 Centipoise) und eine Streckgrenze von 0,96 bis 23,9 Pa (2 bis 50 lbs/100 ft²) hat.

10. Fluidzusammensetzung gemäß einem der Ansprüche 1 bis 7, in der das Fluid (a) eine Zementaufschlämmung oder eine Mischung aus Bohrflüssigkeit und Zementaufschlämmung darstellt, wobei die Fluidzusammensetzung eine plastische Viskosität von 10 - 400 x 10⁻³ Pas (10 - 400 Centipoise) und eine Streckgrenze von 0 bis 47,9 Pa (0 bis 100 lbs/100 ft²) hat.

11. Verfahren zur Umwandlung einer Bohrflüssigkeit in eine Zementaufschlämmung, um eine Auskleidung in einem Bohrloch abzusichern, wobei die Auskleidung eine innere und eine äußere Wandung aufweist und das Bohrloch einen ringförmigen Raum um die äußere Wandung der Auskleidung herum definiert, der von der Bohrflüssigkeit eingenommen wird, bei dem man
ein Zementmaterial zur Bohrflüssigkeit zugibt und
ein als Dispergiermittel verwendetes Copolymer gemäß einem der Ansprüche 1 bis 3 zu der Bohrflüssigkeit hinzufügt.

12. Verfahren zum Absichern einer Auskleidung in einem Bohrloch, wobei die Auskleidung eine innere und eine äußere Wandung aufweist und das Bohrloch einen ringförmigen Raum um die äußere Wandung der Auskleidung herum definiert, der von der Bohrflüssigkeit eingenommen wird, bei dem man
die Bohrflüssigkeit durch eine abbindende Zementzusammensetzung gemäß einem der Ansprüche 1 bis 7 und 10 ersetzt, wobei das Fluid eine Zementaufschlämmung enthält.

13. Verfahren zum Absichern einer Auskleidung in einem Bohrloch, wobei die Auskleidung eine innere und eine äußere Wandung aufweist und das Bohrloch einen ringförmigen Raum um die äußere Wandung der Auskleidung herum definiert, der von der Bohrflüssigkeit eingenommen wird, bei dem man
die Bohrflüssigkeit zumindest teilweise mit einem ersten Verdrängungsfluid aus dem ringförmigen Raum verdrängt, der eine Zusammensetzung gemäß einem der Ansprüche 1 bis 9 enthält, wobei das Fluid eine Trennflüssigkeit enthält, und das erste Verdrängungsfluid durch eine abbindende Zementaufschlämmung ersetzt.

14. Verfahren zum Perforieren einer in einem Bohrloch gesicherten Verkleidung, um die Gewinnung von flüssigen Mineralien zu ermöglichen, wobei die Auskleidung eine innere und eine äußere Wandung aufweist und das Bohrloch einen ringförmigen Raum um die äußere Wandung der Auskleidung herum definiert, der mit einem abgebundenen Zement angefüllt ist, bei dem man
mit Hilfe von Zusammensetzungen gemäß einem der Ansprüche 1 bis 9, in denen das Fluid ein Ergänzungsfluid enthält, im Bohrloch einen hydrostatischen Druck aufrechterhält.

## Revendications

1. Composition fluide pour l'utilisation dans le forage et la complétion de puits souterrains comprenant :
(a) un fluide choisi parmi un fluide de complétion, un fluide d'espacement, une suspension de ciment, et un mélange d'un fluide de forage et d'une suspension de ciment; et
(b) un copolymère dispersant comprenant un premier monomère et un second monomère, dans lequel ledit premier monomère est choisi parmi l'anhydride maléique, l'acide maléique, l'acide acrylique, et l'acide méthacrylique, et dans lequel le second monomère est choisi au sein du groupe composé de l'éthène sulfoné, du propène sulfoné, du 1-butène sulfoné, du 2-butène sulfoné, du 1-pentène sulfoné, du 2-pentène sulfoné, du 2-méthyl-1-butène sulfoné, du 2-méthyl-2-butène sulfoné, du 3-méthyl-1-butène sulfoné, du cyclopentène sulfoné, du cyclohexène sulfoné, du 1-hexène sulfoné, du 2-hexène sulfoné, du 3-hexène sulfoné, du 2-méthyl-1-pentène sulfoné, du 2-méthyl-2-pentène sulfoné, du 2-méthyl-3-pentène sulfoné, du 3-méthyl-1-pentène sulfoné, du 3-méthyl-2-pentène sulfoné, du 4-méthyl-1-pentène sulfoné, du 3,3-diméthyl-1-butène sulfoné, du 2,3-diméthyl-1-butène sulfoné, du 2,3-diméthyl-2-butène sulfoné, du 2-éthyl-1-butène sulfoné, du 1,3-butadiène sulfoné, du 1,3-pentadiène sulfoné, du 1,4-pentadiène sulfoné, du 2-méthyl-1,3-butadiène sulfoné, du 2,3-diméthyl-1,3-butadiène sulfoné, du 2-éthylbuta-diène sulfoné, du 2-méthy1-1,3-pentadiène sulfoné, du 3-méthyl-1,3-pentadiène sulfoné, du 4-méthyl-1,3-pentadiéne sulfoné, du 2-méthyl-1,4-pentadiène sulfoné, du 3-méthyl-1,4-pentadiène sulfoné, du 4-méthyl-1,4-pentadiène sulfoné, du 1,3-hexadiène sulfoné, du 1,4-hexadiène sulfoné, du 1,5-hexadiène sulfoné, du 2,4-hexadiène sulfoné, et du 1,3,5-hexa-triène sulfoné.

2. Fluide selon la revendication 1, caractérisé en ce que les groupes acide sulfonique et/ou acide carboxylique du copolymère dispersant sont présents sous forme neutralisée, en tant que sels de métaux alcalins ou de sels d'ammonium.

3. Fluide selon la revendication 1, ou la revendication 2, caractérisé en ce que dans ledit copolymère dispersant, le ratio molaire entre ledit premier monomère et ledit second monomère est compris entre 10/1 et 1/10.

4. Fluide selon l'une quelconque des revendications 1 à 3, caractérisé en ce que ledit fluide comprend de 0,285 à 57,1 g de dispersant par litre de fluide (de 0,1 à 20,0 livres dudit dispersant pour 42,0 gallons dudit fluide).

5. Fluide selon l'une quelconque des revendications 1 à 3, caractérisé en ce que ledit fluide comprend de 2,85 à 28,5 g de dispersant par litre de fluide (de 1 à 10,0 livres dudit dispersant pour 42,0 gallons dudit fluide).

6. Fluide selon l'une quelconque des revendications précédentes, caractérisé en ce que le copolymère dispersant a un poids moléculaire compris entre 2.000 et 12.000 avant sulfonation.

7. Fluide selon l'une quelconque des revendications précédentes, caractérisé en ce que le copolymère dispersant est hydrosoluble.

8. Composition fluide selon l'une quelconque des revendications précédentes, dans lequel le fluide (a) est un fluide d'espacement ou un fluide de complétion, et le copolymère dispersant comprend des groupes choisis parmi des groupes polaires non ioniques, des groupes hydroxyle, des groupes ester aliphatique, et des groupes alkylène oxyde, ainsi que des groupes sulfonate.

9. Composition fluide selon l'une quelconque des revendications 1 à 8, dans laquelle le fluide (a) est un fluide d'espacement, ou un fluide de complétion, ladite composition fluide ayant une viscosité plastique de 3 à 70 x 10⁻³ Pas (3 à 70 centipoises), et un point de rupture compris entre 0,96 et 23,9 Pas (2 à 50 livres/100 pieds carrés).

10. Composition fluide selon l'une quelconque des revendications 1 à 7, dans laquelle le fluide (a) est une suspension de ciment, ou un mélange d'un fluide de forage et de suspension de ciment, ladite composition fluide ayant une viscosité plastique de 10 à 400 x 10⁻³ Pas (10 à 400 centipoises), et un point de rupture compris entre 0 et 47,9 Pas (0 à 100 livres/100 pieds carrés).

11. Méthode de conversion d'un fluide de forage en une suspension de ciment pour fixer un chemisage dans un trou de forage, dans laquelle ledit chemisage a une paroi interne et une paroi externe, et dans laquelle ledit trou de forage définit un espace annulaire autour de ladite paroi externe dudit chemisage, ledit espace annulaire étant occupé par ledit fluide de forage, ladite méthode comprenant :
- l'addition d'un matériau à base de ciment audit fluide de forage; et
- l'addition d'un copolymère dispersant, selon l'une quelconque des revendications 1 à 3, audit fluide de forage.

12. Méthode de fixation d'un chemisage à l'intérieur d'un trou de forage, dans laquelle ledit chemisage a une paroi interne et une paroi externe, et dans laquelle ledit trou de forage définit un espace annulaire autour de ladite paroi externe dudit chemisage, ledit espace annulaire étant occupé par un fluide de forage, ladite méthode comprenant :
- le déplacement dudit fluide de forage avec une composition à base de ciment durcissable, selon l'une quelconque des revendications 1 à 7, et 10, dans laquelle le fluide comprend une suspension de ciment.

13. Méthode de fixation d'un chemisage dans un trou de forage, dans laquelle ledit chemisage a une paroi interne et une paroi externe, et dans laquelle ledit trou de forage définit un espace annulaire autour de la paroi externe dudit chemisage, ledit espace annulaire étant occupé par un fluide de forage, laquelle méthode comprend :
- un déplacement au moins partiel dudit fluide de forage à partir de l'espace annulaire, avec un premier fluide de déplacement comprenant une composition selon l'une quelconque des revendications 1 à 9, dans lequel le fluide comprend un fluide d'espacement, et le déplacement dudit premier fluide de déplacement, avec une suspension de ciment durcissable.

14. Méthode de perforation d'un chemisage fixé dans un trou de forage, pour permettre la récupération d'un fluide minéral, dans laquelle ledit chemisage a une paroi interne et une paroi externe, et dans laquelle ledit trou de forage définit un espace annulaire autour de la paroi externe dudit chemisage, ledit espace annulaire étant occupé par un ciment durci, ladite méthode comprenant :
- le maintien d'une tête hydrostatique dans ledit trou de forage avec une composition selon l'une quelconque des revendications 1 à 9, dans laquelle ledit fluide comprend un fluide de complétion.
